# EUROPÄISCHE PATENTANMELDUNG

(11) **EP 3 907 400 A1**
(43) Veröffentlichungstag der Anmeldung: **10.11.2021**
(21) Anmeldenummer: 21172279.8
(22) Anmeldetag: 05.05.2021
(51) Int. Cl.: F03B 13/06, F25C 3/04

(54) **BESCHNEIUNGSVORRICHTUNG UND VERFAHEN ZUM BETREIBEN EINER BESCHNEIUNGSVORRICHTUNG**

(30) Priorität: 08.05.2020 AT 503972020
(71) Anmelder: Fritz, Helmuth, 6600 Reutte (AT)
(72) Erfinder: Fritz, Helmuth, 6600 Reutte (AT)
(74) Vertreter: Torggler & Hofinger Patentanwälte

(57) **Zusammenfassung**

Beschneiungsvorrichtung zur Beschneiung von Skipisten, wobei wenigstens eine Entnahmestelle (2) zur Versorgung eines Beschneiungsgerätes (3) mittels Wasser vorgesehen ist, wobei eine Wasserleitung (4) ein mit Wasser speisbares Speicherreservoir (5) mit der wenigstens einen Entnahmestelle (2) verbindet, wobei das Speicherreservoir (5) eine größere absolute Höhenlage als die wenigstens eine Entnahmestelle (2) aufweist, wobei
- die Wasserleitung das Speicherreservoir (5) mit wenigstens einer Turbine (6) verbindet, welche Turbine (6) eine geringere absolute Höhenlage aufweist als das Speicherreservoir (5), wobei die Turbine (6) dazu ausgebildet ist eine potenzielle Energie des im Speicherreservoir (5) gespeicherten Wassers in kinetische Energie umzusetzen und
- wenigstens eine mit der Wasserleitung (4) verbundene Pumpenanlage (9) vorgesehen ist, welche dazu ausgebildet ist, in der Wasserleitung (4) einen Druck aufzubauen und/oder das Speicherreservoir (5) mit Wasser zu befüllen.

## Beschreibung

Die vorliegende Erfindung betrifft eine Beschneiungsvorrichtung zur Beschneiung von Skipisten mit den Merkmalen des Oberbegriffs des Anspruchs 1 und ein Verfahren zum Betreiben einer Beschneiungsvorrichtung mit den Merkmalen des Oberbegriffs des Anspruchs 10.

Durch den Stand der Technik bekannte Beschneiungsvorrichtungen zur Beschneiung von Skipisten weisen wenigstens eine Entnahmestelle auf, welche zur Versorgung eines Beschneiungsgerätes (beispielsweise einer Schneekanone oder einer Schneelanze) dient. Diese Entnahmestelle, welche sich vorzugsweise in Pistennähe befindet, wird über eine Wasserleitung mit Wasser gespeist.

Um die Wasserleitung auch konstant mit genügend Druck und einem ausreichenden Wasservolumen zu versorgen, ist es bekannt, Speicherreservoirs anzulegen. Diese sind meist durch Speicherseen umgesetzt, welche sich in einer höheren absoluten Höhenlage befinden als der Großteil der Wasserleitung, sodass der natürliche Wasserdruck, der durch die Höhendifferenz entsteht, bereits für die Druckerzeugung in der Wasserleitung genutzt wird. Daraus folglich entsteht bei der Entnahmestelle zur Versorgung eines Beschneiungsgerätes ein höherer Entnahmedruck.

Anders ausgedrückt kann auch gesagt werden, dass das Speicherreservoir - wenn es eine höhere absolute Höhe aufweist als eine Entnahmestelle - eine höhere potentielle Energie aufweist, welche sich durch einen Druck in der Wasserleitung, welche das Speicherreservoir mit der Entnahmestelle verbindet, zeigt.

Um die Speicherreservoirs zu befüllen ist es bekannt, über Pumpensysteme dieses Speicherreservoir, über die Wasserleitung mit Wasser zu versorgen. Alternativ oder zusätzlich kann es jedoch auch vorgesehen sein, dass die Speicherreservoirs durch natürliche Wasservorkommen, beispielsweise Gebirgsbäche, befüllt werden.

Diese Pumpen oder Pumpanlagen sind in der Regel mit einer geringeren absoluten Höhenlage als das Speicherreservoir ausgebildet, wobei zumeist die Pumpanlage in einem Tal angeordnet ist und der Speichersee mit einer höheren absoluten Höhenlage am Berg zumeist in der Nähe einer Gipfelstation eines Skigebiets.

Entsprechende bekannte Beschneiungsvorrichtungen aus dem Stand der Technik sind beispielsweise aus der AT 11274 U1, der EP 2 249 107 A1, der US 2,676,471 A oder der EP 3 425 311 A1 bekannt.

Bekannte Beschneiungsgeräte zur Erzeugung von Kunstschnee sind beispielsweise Schneelanzen oder Schneekanonen. Das Prinzip dabei ist es, ein unter Druck stehendes Wasser oder Wasser-Luft-Gemisch durch eine Düse fein zu verstäuben, wobei beim Austritt aus der Düse durch die Expansion des unter Druck stehenden Wassers oder Wasser-Luft-Gemisches dieses abkühlt und gefriert, wobei anschließend die gefrorenen Wasserpartikel auf einen Boden - genauer gesagt: eine Skipiste - niederrieseln. Diese Kunstschneeproduktion ist jedoch auch nur bedingt bei gewissen Grenztemperaturen (von ca. 0 bis -3°C) möglich. Eine solche Schneelanze ist beispielsweise aus der DE 10 137 942 A1 bekannt.

Nachteilig an solchen Beschneiungsvorrichtungen ist jedoch, dass sie - gesehen über das ganze Jahr - eine sehr geringe Ausnutzung aufweist, da die Kunstschneeproduktion meist nur zum Beginn oder innerhalb der Wintersaison erforderlich ist. Das verbleibende Jahr und auch zwischen den einzelnen (Beschneiungs-) Tagen, an welchen kein Kunstschnee produziert wird, ist die Beschneiungsvorrichtung ungenutzt.

Bei fast allen Skigebieten im Alpenraum bestehen behördlich genehmigte Beschneiungsvorrichtungen. Dabei werden die Pisten über eine Höhendifferenz von ca. 400 bis 1000 m (und teilweise sogar mehr) beschneit. Auch Lösungen mit mehreren Speicherreservoirs, um die Beschneiung über einen längeren Zeitraum sicherzustellen, sind bekannt.

Dies erzeugt ein enormes Potential von ungenutzten bereits bestehenden Anlagen.

Aufgabe der vorliegenden Erfindung ist es, Beschneiungsvorrichtungen effektiver zu nutzen und/oder einer höheren Ausnutzung zuzuführen und/oder energieeffizienter zu betreiben.

Diese Aufgabe wird durch eine Beschneiungsvorrichtung zur Beschneiung von Skipisten mit den Merkmalen des Anspruchs 1 gelöst. Hinsichtlich eines Verfahrens zum Betreiben einer Beschneiungsvorrichtung wird die Aufgabe mit den Merkmalen des Anspruchs 10 gelöst.

Erfindungsgemäß ist vorgesehen, dass eine Beschneiungsvorrichtung eine Entnahmestelle zur Versorgung eines Beschneiungsgerätes mittels Wasser aufweist, wobei eine Wasserleitung ein mit Wasser speisbares Speicherreservoir mit der wenigstens einen Entnahmestelle verbindet, wobei das Speicherreservoir eine größere absolute Höhenlage als die wenigstens eine Entnahmestelle aufweist, wobei
- die Wasserleitung das Speicherreservoir mit wenigstens einer Turbine verbindet, welche Turbine eine geringere absolute Höhenlage aufweist als das Speicherreservoir, wobei die Turbine dazu ausgebildet ist, eine potentielle Energie des im Speicherreservoir gespeicherten Wassers in kinetische Energie umzusetzen
- und wenigstens eine mit der Wasserleitung verbundene Pumpanlage vorgesehen ist, welche dazu ausgebildet ist, in der Wasserleitung einen Druck aufzubauen und/oder das Speicherreservoir mit Wasser zu befüllen.

Somit wird durch die vorliegende Erfindung die Möglichkeit geschaffen, eine potentielle Energie eines Speicherreservoirs, vorzugsweise eines Speichersees, zu nützen, indem - über das bereits bestehende System - mit einer Turbine verbunden wird, wobei über die Wasserleitung das Wasser des Speicherreservoirs der Turbine, welche eine geringere absolute Höhe aufweist, zugeführt wird und dieses potentielle Energieniveau, welches durch die Höhendifferenz entsteht, durch eine Turbine in kinetische Energie umgesetzt wird.

Somit entsteht vor allem im Hinblick zur Abdeckung von Spitzenzeiten an Energiebedarf durch Beschneiungsvorrichtungen die Möglichkeit, Energie zu speichern und sie plötzlich abzurufen, wobei das gespeicherte Wasser über eine Turbine beispielsweise in elektrische Energie durch Antreiben eines Generators umgesetzt werden kann.

Die Erfindung macht es auf einfache Art und Weise möglich, bereits bestehende Systeme energieeffizienter und mit einer höheren Auslastung zu betreiben ohne zusätzliche hohe Investitionskosten aufbringen zu müssen.

Alternative Energiequellen (wie beispielsweise Solaranlagen und Windkraftanlagen) im öffentlichen Stromversorgungnetz erzeugen stark schwankende Energiemengen. Bei Sonneneinstrahlung oder starkem Wind wird maximale elektrische Energie erzeugt, sobald jedoch Wolken erscheinen oder der Wind abflacht, reduziert sich die Stromerzeugung drastisch. Derartige Schwankungen der Energieproduktion werden derzeit großräumig im Stromversorgungsnetz ausgeglichen, wobei teilweise negative Strompreise erzielt werden.

Atomkraftwerke und Flusskraftwerke können auf Stromschwankungen nicht reagieren, die bestehenden Hochdruck-Wasserkraftwerke und große Pumpspeicherwerke reagieren nur extrem langsam und träge. Dagegen ist die Reaktionsmöglichkeit der Ausführungsvarianten gemäß der Erfindung besonders kurzfristig.

Vorteilhafte Ausführungsformen der Erfindung sind in den abhängigen Ansprüchen definiert.

Es kann vorgesehen sein, dass die wenigstens eine Turbine mit einem Generator zur Stromerzeugung koppelbar ist, wobei der Generator dazu ausgebildet ist, kinetische Energie in elektrische Energie umzuwandeln. Somit kann es beispielsweise vorgesehen sein, dass die potenzielle Energie des Speicherreservoirs über die Wasserleitung und die Turbine durch Nutzen eines Generators eine elektrische Energie umgesetzt oder umsetzbar ist.

Vorzugsweise ist vorgesehen, dass der Generator mit dem öffentlichen Stromversorgungsnetz und/oder einem elektrischen Speicher verbindbar ist. Durch eine solche Ausgestaltung ist die Möglichkeit geschaffen, dass die durch den Generator erzeugte elektrische Energie direkt in ein öffentliches Stromversorgungsnetz eingespeist wird. Jedoch ist es auch durchaus vorstellbar, dass die elektrische Energie in einem elektrischen Speicher - beispielsweise einer Batterie oder eines Akkumulator - gespeichert wird und zur autarken Versorgung der Beschneiungsvorrichtung genutzt wird.

Vor allem beim Einsatz von mehreren Beschneiungsgeräten kann es notwendig sein, die Wasserleitung durch eine zusätzliche Pumpe mit einem Druck zu beaufschlagen, da der Druck durch das mit einer größeren Höhenlage ausgebildete Speicherreservoir nicht ausreicht.

Vorzugsweise ist vorgesehen, dass die Pumpenanlage eine geringere absolute Höhe aufweist als das Speicherreservoir.

Die Pumpe kann beispielsweise eine variable Schaufelgeometrie aufweisen und dazu ausgebildet sein, als Turbine zu fungieren. Somit kann es vorgesehen sein, dass die Pumpe der Pumpanlage durch Verstellen der Schaufelgeometrie schnell zu einer Turbine umfunktioniert werden kann, wodurch das Vorsehen einer zusätzlichen Einheit überflüssig wird.

Es kann vorgesehen sein, dass die Pumpanlage eine elektrische Antriebseinheit aufweist, welche elektrische Antriebseinheit dazu ausgebildet ist, in einem Betriebsmodus als Motor zu arbeiten und in einem weiteren Betriebsmodus als Generator. Somit wird beispielsweise in Verbindung mit einer Pumpe mit variabler Schaufelgeometrie die Möglichkeit geschaffen, dass die Antriebseinheit oder der Antriebsmotor der Pumpe auch als Generator arbeitet, welcher elektrische Energie durch das Umsetzen der kinetischen Energie der Turbine erzeugt.

Vorzugsweise ist vorgesehen, dass wenigstens eine alternative Energiequelle - vorzugsweise ein Solarmodul und/oder wenigstens eine Windkraftanlage - vorgesehen ist, welche alternative Energiequelle dazu ausgebildet ist, die Pumpanlage anzutreiben. Ein Solarmodul kann beispielsweise als Photovoltaik-Anlage ausgebildet sein.

Windkraftanlagen können beispielsweise durch Windturbinen oder Windräder ausgebildet sein.

Die alternative Energiequelle kann beispielsweise die Pumpe der Pumpenanlage direkt oder indirekt antreiben, wobei es durchaus vorstellbar ist, dass ein Windrad beispielsweise direkt mechanisch an eine Pumpe gekoppelt ist.

Es ist beispielsweise möglich, dass über eine Photovoltaik-Anlage elektrische Energie erzeugt wird, welche anschließend wiederum durch eine elektrische Antriebseinheit der Pumpenanlage zum Betreiben der Pumpe genutzt wird.

Es kann beispielsweise vorgesehen sein, dass durch die Erfindung das große Problem von alternativen Energiequellen ausgemerzt wird, dass alternative Energiequellen zumeist nur zu Zeitpunkten Energie bereitstellen, an welchen bereits ein Überschuss besteht. Beispielsweise bei einer starken Sonneneinstrahlung unter Tag, wodurch starke Schwankungen entstehen (z.B. bei Photovoltaik-Anlagen). Ähnliches ist bei Windkraftanlagen zu beobachten.

Durch die Erfindung ist es jedoch möglich, diese durch alternative Energiequellen erzeugte Energie beispielsweise über eine Pumpenanlage einem Speicherreservoir einer Beschneiungsvorrichtung zuzuführen, wobei diese potentiell gespeicherte Energie bei Bedarf schnell wieder über die Wasserleitung und die Turbine abrufbar ist.

Vorzugsweise ist vorgesehen, dass die Wasserleitung ein Speicherreservoir mit einer eine geringere absolute Höhe aufweisende Pumpenanlage verbindet und zwischen Pumpenanlage und Speicherreservoir die wenigstens eine Entnahmestelle zur Versorgung des Beschneiungsgerätes - vorzugsweise einer Schneekanone und/oder einer Schneelanze - angeordnet ist.

Es kann vorgesehen sein, dass die Turbine dazu ausgebildet ist, das wenigstens eine Beschneiungsgerät anzutreiben. Dies kann beispielsweise durch Umsetzen der kinetischen Energie der Turbine durch einen Generator in elektrische Energie erfolgen, welche elektrische Energie wiederum an das Beschneiungsgerät weitergeleitet wird.

Vorzugsweise ist vorgesehen, dass entlang der Wasserleitung wenigstens zwei - vorzugsweise mehrere - Entnahmestellen vorgesehen sind, wobei an jeder Entnahmestelle wenigstens ein Beschneiungsgerät angeschlossen ist.

Weiters wird Schutz begehrt für ein Verfahren zum Betreiben einer Beschneiungsvorrichtung, wobei die Beschneiungsvorrichtung drei Betriebszustände aufweist:
- Umsetzen einer potentiellen Energie eines Speicherreservoirs - vorzugsweise eines Speichersees - der Beschneiungsvorrichtung in kinetische Energie mittels wenigstens einer Turbine,
- vorzugsweise Erzeugen von elektrischer Energie mittels eines durch die wenigstens eine Turbine angetriebenen Generators,
- Pumpen von Wasser über eine Wasserleitung in ein Speicherreservoir, welches Speicherreservoir eine größere absolute Höhenlage aufweist und
- Fördern von Wasser über eine Wasserleitung und eine Entnahmestelle zu wenigstens einem Beschneiungsgerät.

Vorzugsweise kann dabei vorgesehen sein, dass wahlweise immer nur einer der Betriebszustände ausgeführt wird. Alternativ ist es auch möglich, mehrere Betriebszustände gleichzeitig auszuführen.

Vorzugsweise kann vorgesehen sein, dass die Wasserleitung als Unterflur-Wasserleitung ausgebildet ist, wobei vorzugsweise die Wasserleitung frostsicher im Erdreich vergraben ist. Alternativ oder zusätzlich kann vorgesehen sein, dass die Wasserleitung als Druckrohr-Leitung ausgebildet ist.

Es kann vorgesehen sein, dass das Speicherreservoir als Speichersee ausgebildet ist.

Weitere Einzelheiten und Ausführungsformen der Erfindung sind anhand der Figuren sowie in der dazugehörigen Figurenbeschreibung ersichtlich. Dabei zeigt:
- Fig. 1: ein aus dem Stand der Technik bekanntes Ausführungsbeispiel einer Beschneiungsvorrichtung,
- Fig. 2: ein erstes erfindungsgemäßes Ausführungsbeispiel,
- Fig. 3: ein weiteres erfindungsgemäßes Ausführungsbeispiel,
- Fig. 4: ein drittes erfindungsgemäßes Ausführungsbeispiel, und
- Fig. 5a-5c: verschiedene Betriebszustände eines Ausführungsbeispiels einer Beschneiungsvorrichtung gemäß der Erfindung.

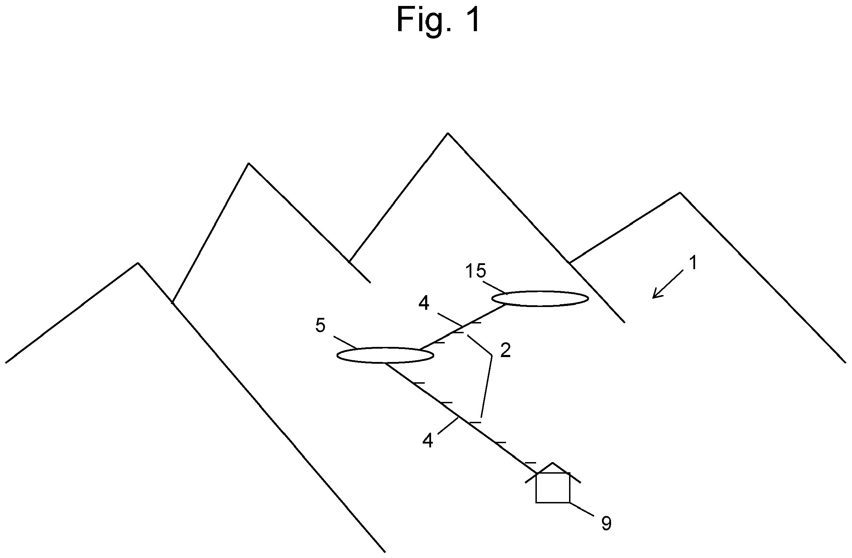

Fig. 1 zeigt ein Ausführungsbeispiel einer Beschneiungsvorrichtung 1, wie es durch den Stand der Technik bekannt ist. Dabei verfügt die Beschneiungsvorrichtung 1 über ein Speicherreservoir 5 und ein weiteres Speicherreservoir 15, welche in diesem konkreten Ausführungsbeispiel als Speicherseen ausgeführt sind.

Die Speicherreservoirs 5, 15 sind mit einer größeren absoluten Höhe ausgeführt als die Pumpanlage 9, welche sich in einem Tal befindet. Um die Speicherreservoirs 5, 15 und die Pumpenanlage 9 zu verbinden, ist eine Wasserleitung 4 vorgesehen, welche sich bevorzugt entlang einer Piste eines Skigebietes erstreckt.

Um Wasser aus der Wasserleitung 4 entnehmen zu können, sind Entnahmestellen 2 vorgesehen, welche mit Beschneiungsgeräten 3 verbunden werden können. Weiters sind elektrische Anschlussstellen für die Beschneiungsgeräte 3 erforderlich, welche in den meisten Fällen gemeinsam mit der Wasserleitung 4 verlegt werden. Diese elektrischen Anschlussstellen sind in diesem Ausführungsbeispiel aus Gründen der Übersichtlichkeit nicht gezeigt. Diese Beschneiungsvorrichtungen 1 sind in so gut wie jedem Skigebiet vorgesehen, wobei die Anzahl der Speicherreservoirs 5, 15, der Pumpenanlagen 9 und der Wasserleitungen 4 natürlich individuell skalierbar oder erweiterbar ist.

Kleinere Beschneiungsvorrichtung 1 (mit einer Höhedifferenz von ca. 400 Meter und weniger) weisen zumeist keine Speicherreservoirs 5 auf, wobei über eine Pumpenanlege 9 Wasser aus einem Bach, See oder einer anderen Wasserquelle über die Wasserleitung 4 direkt an die Entnahmestellen 2 (und dort angeordnete Beschneiungsgeräte 3) gefördert wird. Diese bestehenden Beschneiungsvorrichtungen 1 können relativ kostengünstig durch ein Speicherreservoir 5 ergänzt werden.

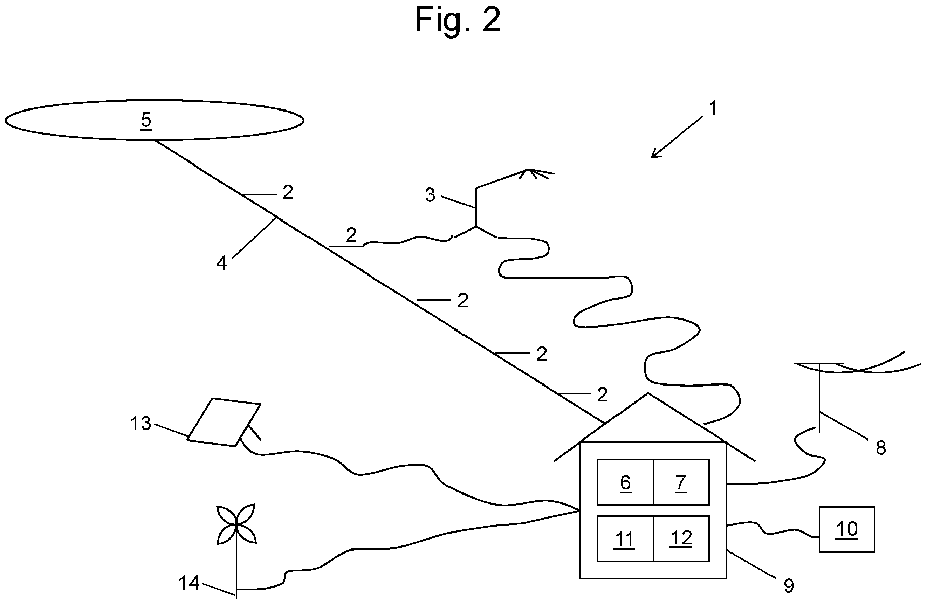

Fig. 2 zeigt ein erstes Ausführungsbeispiel einer erfindungsgemäßen Beschneiungsvorrichtung 1. Diese Beschneiungsvorrichtung 1 verfügt wiederum über ein Speicherreservoir 5. Dieses Speicherreservoir 5 ist über die Wasserleitung 4 mit einer Pumpenanlage 9 verbunden.

Die Pumpenanlage 9 ist dazu ausgebildet, über eine Pumpe 11 Wasser mit Hilfe der Wasserleitung 4 dem Speicherreservoir 5 zuzuführen. Weiters kann über die Pumpe 11 ein Druck in der Wasserleitung 4 aufgebaut werden. Die Pumpe 11 wird über eine Antriebseinheit 12, vorzugsweise einen Elektromotor, angetrieben, wobei dieser Elektromotor (unter anderem) über ein Energieversorgungsnetz 8 antreibbar ist.

Entlang der Wasserleitung 4 sind mehrere Entnahmestellen 2 vorgesehen, an welchen (beispielsweise über eine Schlauchleitung) ein Beschneiungsgerät 3 angeschlossen werden kann - genauer gesagt: bei dem gezeigten Ausführungsbeispiel an eine Entnahmestelle 2 angeschlossen ist.

Das gezeigte Beschneiungsgerät 3 ist in diesem konkreten Ausführungsbeispiel als Schneelanze ausgebildet. Weiters ist das Beschneiungsgerät 3 über eine elektrische Leitung mit der hier als Haus dargestellten Pumpenanlage 9 verbunden.

In diesem konkreten Ausführungsbeispiel ist die als Haus dargestellte Pumpenanlage 9 als zentrale Steuereinheit der Beschneiungsvorrichtung 1 ausgeführt, wobei auch die Beschneiungsgeräte 3 über elektrische Leitungen mit Energie versorgt werden können.

Weiters ist eine Turbine 6 vorgesehen, welche nun die Möglichkeit schafft, potentielle Energie des Speicherreservoirs 5 über die Wasserleitung 4 in kinetische Energie umzusetzen. Die hier gezeigte Turbine 6 ist mechanisch mit einem Generator 7 gekoppelt, wodurch die erzeugte kinetische Energie der Turbine 6 direkt in elektrische Energie umgesetzt werden kann.

Die gewonnene elektrische Energie kann anschließend dem Stromversorgungsnetz 8 bereitgestellt werden oder in einem elektrischen Speicher 10 zwischengespeichert werden.

Ebenfalls sind alternative Energiequellen in diesem Ausführungsbeispiel der Fig. 2 ersichtlich, welche im Konkreten als Solarmodul 13 und Windkraftanlage 14 dargestellt sind. Das Solarmodul 13 und die Windkraftanlage 14 sind durch eine elektrische Leitung mit der Pumpenanlage 9 verbunden, welche - wie bereits weiter oben erwähnt in diesem Ausführungsbeispiel - als zentrale Steuereinheit der Beschneiungsvorrichtung 1 dient.

Durch die alternativen Energiequellen wird die Möglichkeit geschaffen, alternative Energie zu gewinnen, welche über die Antriebseinheit 12 und die Pumpe 11 in potentielle Energie umgesetzt werden kann, indem Wasser über die Wasserleitung 4 in das Speicherreservoir 5 gepumpt wird.

Wenn nun diese durch die alternative Energiequellen gewonnene Energie und im Speicherreservoir 5 gespeicherte Energie benötigt wird, kann diese durch die Turbine 6 und den Generator 7 abgerufen werden und gegebenenfalls an Spitzenzeiten des Stromverbrauches in das Stromversorgungsnetz 8 eingespeist werden.

Alternativ oder zusätzlich ist es jedoch auch möglich, die Beschneiungsvorrichtung 1 autark ohne zusätzliche elektrische Energie aus dem Stromversorgungsnetz 8 zu betreiben, indem die durch die Windkraftanlage 14 und/oder das Solarmodul 13 gewonnene elektrische Energie dazu dient, Wasser über die Wasserleitung 4 in das Speicherreservoir 5 zu pumpen, den elektrischen Speicher 10 zu beladen und/oder die Beschneiungsgeräte 3 zu versorgen.

Es kann jedoch auch vorgesehen sein, dass die Turbine 6 mit dem Generator 7 während der Schneeerzeugung betrieben wird. Somit kann synchron aus dem Speicherreservoir 5 Wasser dem Beschneiungsgerät 3 und der Turbine 6 zugeführt werden, welche Turbine 6 den Generator 7 antreibt, wodurch wiederum Strom erzeugt wird, um das Beschneiungsgerät 3 zu betreiben.

In Fig. 2 wird die Pumpe 11 beispielsweise durch einen in der Nähe befindlichen Bach oder ein öffentliches Wasserversorgungsnetz gespeist, sodass Wasser in die Wasserleitung 4 und den Speicherreservoir 5 gepumpt werden kann. In gleicher Weise wird das Wasser aus der Wasserleitung 4 und dem Speicherreservoir 5 bei Betreiben der Turbine 6 wieder zurückgeführt.

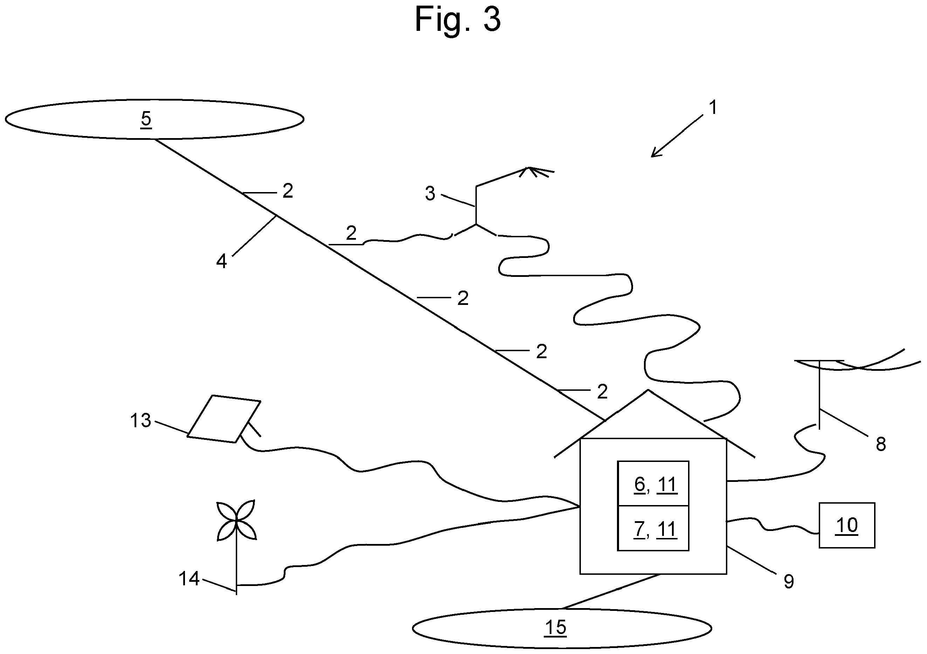

Fig. 3 zeigt ein Ausführungsbeispiel, bei welchem ein weiteres Speicherreservoir 15 vorgesehen ist. Dieses Speicherreservoir 15 weist in diesem Ausführungsbeispiel eine geringere absolute Höhe als das Speicherreservoir 5 auf.

Die Pumpenanlage 9 ist in diesem Ausführungsbeispiel nah an dem weiteren Speicherreservoir 15 angeordnet aber dennoch mit einer geringeren absoluten Höhenlage als das Speicherreservoir 5.

Weiters ist in diesem Ausführungsbeispiel die Pumpe 11 mit einer variablen Schaufelgeometrie ausgebildet, wobei die Pumpe 11 dazu ausgebildet ist, in einem Betriebsmodus als Pumpe 11 zu arbeiten und in einem weiteren Betriebsmodus als Turbine 6 zu arbeiten.

Die Antriebseinheit 12 dieses Ausführungsbeispiels kann sowohl als Antriebseinheit 12 als auch als Generator 7 betrieben werden.

Dieses Ausführungsbeispiel der Fig. 3 entspricht, abgesehen von den angesprochenen Unterschieden, dem der Fig. 2.

Natürlich ist es auch möglich, dem Speicherreservoir 5 durch natürliche Quellen, wie Gebirgsbächen, Gletscherschmelzen, Regenwasser oder Schmelzwasser Wasser zuzuführen, welches die Effizienz der Beschneiungsvorrichtung 1 mit Betrieb der Turbine 6 zusätzlich erhöht, da sich das Speicherreservoir 5 zumindest teilweise ohne zusätzliches Zutun der Pumpe 11 befüllt.

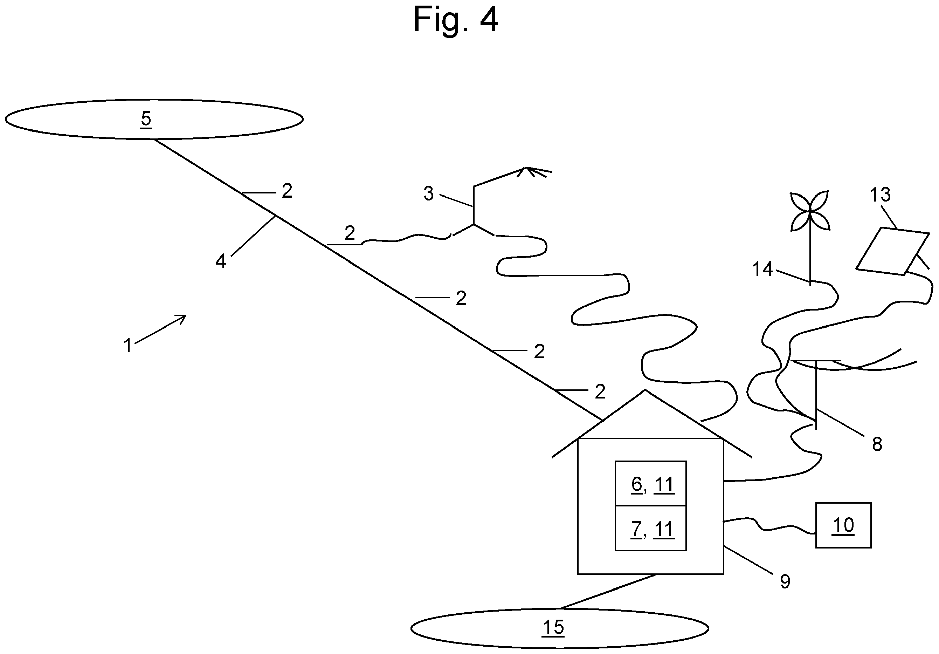

Alternativ oder zusätzlich kann es auch vorgesehen sein, dass alternative Energiequellen (wie beispielsweise Windkraftanlagen 14 und/oder das Solarmodul 13) ihre erzeugte Energie direkt in ein Stromversorgungsnetz 8 eigespeist werden wie in Fig. 4 dargestellt ist.

Die eingespeiste elektrische Energie der alternativen Energiequellen erzeugt jedoch Schwankungen im Stromversorgungsnetz 8 (beispielsweise durch Wolken bei Solarmodulen 13 oder Windböen bei Windkraftanlagen 14). Diese Schwankungen können optimal durch eine Beschneiungsvorrichtung 1 gemäß einer Ausführungsvariante der Erfindung genutzt und/oder geglättet werden.

Es kann bei auftretender überschüssiger elektrischer Energie im Stromversorgungsnetz 8 die elektrische Energie durch das Pumpen der Pumpe 11 von Wasser über die Wasserleitung 4 in das Speicherreservoir 5 in potentielle Energie umgewandelt werden.

Sobald das Stromversorgungsnetz 8 elektrische Energie benötigt, kann die potentielle Energie des Speicherreservoirs 5 über die Turbine 6 in kinetische Energie umgewandelt werden und über einen Generator 7 als elektrische Energie in das Stromversorgungsnetz 8 eingespeist werden.

Dass Ausführungsbeispiel der Fig. 4 entspricht, abgesehen von den alternativen Energiequellen, dem der Fig. 3.

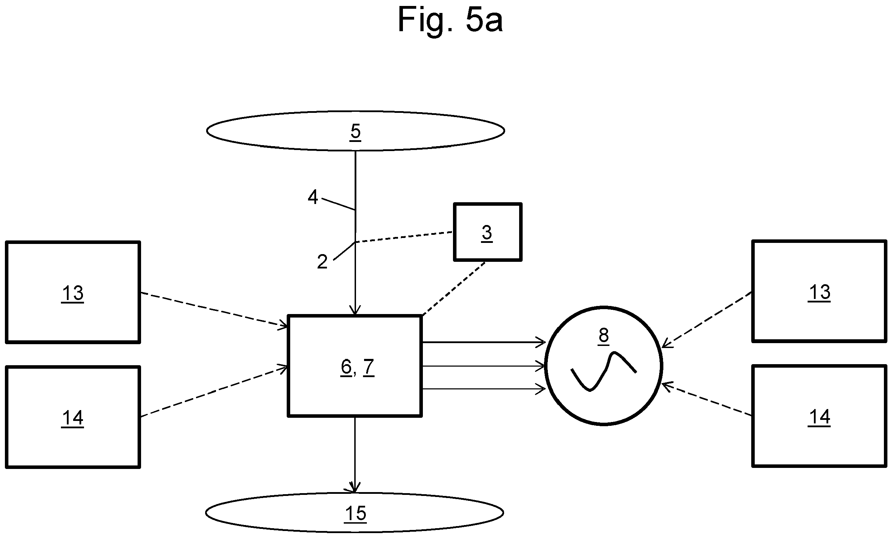

Die Figuren 5a bis 5c zeigen mögliche unterschiedliche Betriebszustände einer erfindungsgemäßen, beispielhaften Ausführungsvariante einer Beschneiungsvorrichtung 1.

In Fig. 5a ist dabei das Umsetzen der potentiellen Energie eines Speicherreservoirs 5 - vorzugsweise eines Speichersees - der Beschneiungsvorrichtung 1 in kinetische Energie mittels wenigstens einer Turbine 6 gezeigt.

In diesem Ausführungsbeispiel wird aus einem Speicherreservoir 5 Wasser über die Wasserleitung 4 der Turbine 6 zugeführt und anschließend in ein weiteres Speicherreservoir 15 weitergeführt.

Die Turbine 6 erzeugt kinetische Energie, wodurch ein Generator 7 angetrieben wird. Der Generator 7 setzt die kinetische Energie der Turbine 6 in elektrische Energie um, welche dem Stromversorgungsnetz 8 bereitgestellt wird. Zusätzlich kann vorgesehen sein, dass durch die alternativen Energiequellen (bzw. das Solarmodul 13 und/oder die Windkraftanlage 14) ebenfalls Energie erzeugt wird, welche auch dem Stromversorgungsnetz 8 bereitgestellt werden kann. Diese Option ist durch die strichlierten Linien gekennzeichnet.

Die alternativen Energiequellen können entweder über die Beschneiungsvorrichtung 1 elektrische Energie in das Stromversorgungsnetz 8 oder an die Beschneiungsvorrichtung 1 abgeben, oder am Stromversorgungsnetz 8 direkt angebunden sein und über dieses Stromversorgungsnetz 8 elektrische Energie der Beschneiungsvorrichtung 1 bereitstellen. Diese zwei Optionen (welche alternativ oder in Kombination vorgesehen sein können) sind in den Figuren 5a bis 5c dargestellt.

Weiters kann es währenddessen vorgesehen sein, dass ein Beschneiungsgerät 3 betrieben wird, welches über die Entnahmestelle 2 mit Wasser aus der Wasserleitung 4 bzw. dem Speicherreservoir 5 versorgt wird.

Elektrische Energie kann das Beschneiungsgerät 3 während dieses Betriebszustandes der Beschneiungsvorrichtung 1 vom Generator 7, aus dem Stromversorgungsnetz 8, vom Solarmodul 13, von der Windkraftanlage 14 oder einer Kombination daraus beziehen.

Auch diese Option des simultanen Betreibens des Beschneiungsgerätes 3 ist durch eine strichlierte Linie gekennzeichnet.

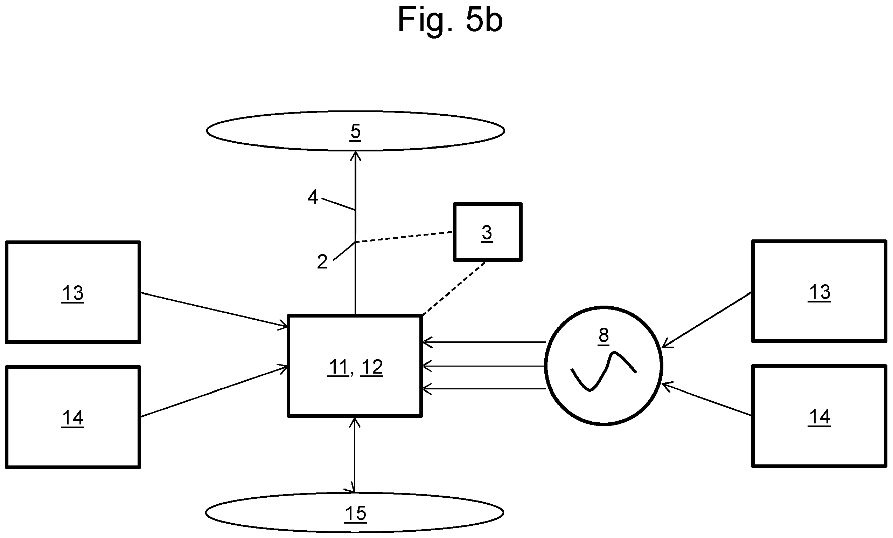

Fig. 5b zeigt einen Betriebsmodus der Beschneiungsvorrichtung 1, wobei Wasser durch die Pumpe 11 über eine Wasserleitung 4 in ein Speicherreservoir 5 gepumpt wird, wobei das Speicherreservoir 5 eine größere absolute Höhenlage als die Pumpe 11 aufweist.

In diesem konkreten Ausführungsbeispiel wird durch die Pumpe 11 Wasser aus einem weiteren Speicherreservoir 15 entnommen und dem Speicherreservoir 5 zugeführt. Die Pumpe 11 wird über die Antriebseinheit 12 angetrieben.

Die Antriebseinheit 12 ist als Elektromotor ausgebildet, welcher elektrische Energie aus dem Stromversorgungsnetz 8, dem Solarmodul 13 oder der Windkraftanlage 14 beziehen kann.

Weiters ist durch die strichlierte Linie die Möglichkeit gezeigt, dass synchron der Betrieb eines Beschneiungsgerätes 3 möglich ist.

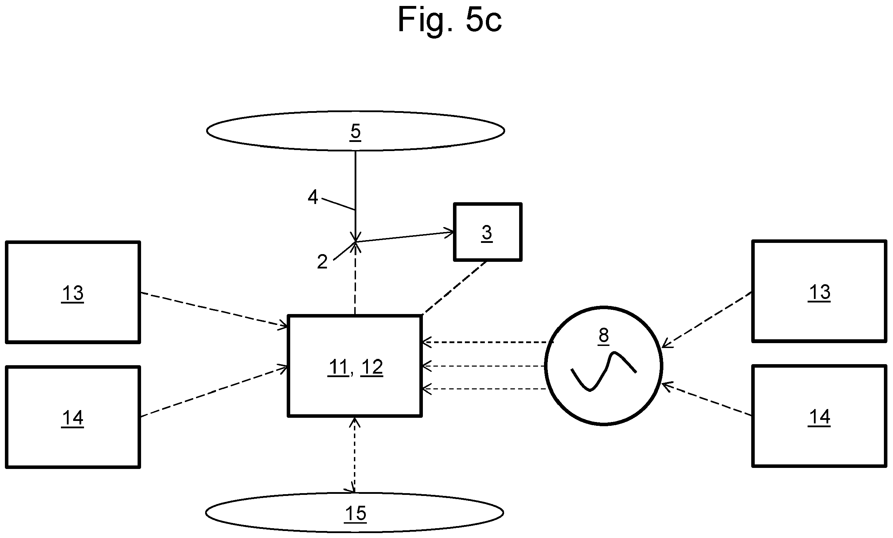

Fig. 5c zeigt einen Betriebszustand der Beschneiungsvorrichtung 1, bei welchem Wasser über eine Wasserleitung 4 und eine Entnahmestelle 2 zu wenigstens einem Beschneiungsgerät 3 gefördert wird, um das Beschneiungsgerät 3 zu betreiben.

Gleichzeitig ist es natürlich möglich (wie wiederum durch die strichlierten Linien dargestellt ist), dass die alternativen Energiequellen - Solarmodul 13 und/oder Windkraftanlage 14 - elektrische Energie erzeugen, welche zum Betreiben einer Pumpe 11 über die Antriebseinheit 12, zum Betreiben des Beschneiungsgerätes 3, zur Weitergabe an das Stromversorgungsnetz 8 oder zur Weitergabe an einen elektrischen Speicher 10 genutzt werden kann.

Jedoch ist es auch oder zusätzlich möglich, die Pumpe 11 über die Antriebseinheit 12 mittels elektrischer Energie aus dem Stromversorgungsnetz 8 oder einem elektrischen Speicher 10 zu versorgen, wobei die Pumpe 11 zusätzlich Wasser über die Wasserleitung 4 an das Beschneiungsgerät 3 fördern kann.

Die in den Figuren ersichtlichen Ausführungsbeispiele mit der Nutzung immer nur eines Beschneiungsgerätes 3 sind natürlich nur beispielhaft zu verstehen und durchaus auch für die Nutzung mehrerer Beschneiungsgeräte 3 an einer oder mehrerer Entnahmestelle 2 geeignet und auslegbar.

### Bezugszeichenliste:

- 1: Beschneiungsvorrichtung
- 2: Entnahmestelle
- 3: Beschneiungsgerät
- 4: Wasserleitung
- 5: Speicherreservoir
- 6: Turbine
- 7: Generator
- 8: Stromversorgungsnetz
- 9: Pumpenanlage
- 10: elektrischer Speicher
- 11: Pumpe
- 12: Antriebseinheit
- 13: Solarmodul
- 14: Windkraftanlage
- 15: weiteres Speicherreservoir

## Patentansprüche

1. Beschneiungsvorrichtung zur Beschneiung von Skipisten, wobei wenigstens eine Entnahmestelle (2) zur Versorgung eines Beschneiungsgerätes (3) mittels Wasser vorgesehen ist, wobei eine Wasserleitung (4) ein mit Wasser speisbares Speicherreservoir (5) mit der wenigstens einen Entnahmestelle (2) verbindet, wobei das Speicherreservoir (5) eine größere absolute Höhenlage als die wenigstens eine Entnahmestelle (2) aufweist, **dadurch gekennzeichnet, dass**
- die Wasserleitung das Speicherreservoir (5) mit wenigstens einer Turbine (6) verbindet, welche Turbine (6) eine geringere absolute Höhenlage aufweist als das Speicherreservoir (5), wobei die Turbine (6) dazu ausgebildet ist eine potenzielle Energie des im Speicherreservoir (5) gespeicherten Wassers in kinetische Energie umzusetzen und
- wenigstens eine mit der Wasserleitung (4) verbundene Pumpenanlage (9) vorgesehen ist, welche dazu ausgebildet ist, in der Wasserleitung (4) einen Druck aufzubauen und/oder das Speicherreservoir (5) mit Wasser zu befüllen.

2. Beschneiungsvorrichtung nach Anspruch 1, **dadurch gekennzeichnet, dass** die wenigstens eine Turbine (6) mit einem Generator (7) zur Stromerzeugung koppelbar ist, wobei der Generator (7) dazu ausgebildet ist, die kinetische Energie in elektrische Energie umzusetzen.

3. Beschneiungsvorrichtung nach Anspruch 2, **dadurch gekennzeichnet, dass** der Generator (7) mit einem öffentlichen Stromversorgungsnetz (8) und/oder einem elektrischen Speicher (10) verbindbar ist.

4. Beschneiungsvorrichtung nach wenigstens einem der vorangegangenen Ansprüche, **dadurch gekennzeichnet, dass** die Pumpenanlage (9) eine geringere absolute Höhenlage aufweist als das Speicherreservoir (5), wobei vorzugsweise eine Pumpe (11) eine variable Schaufelgeometrie aufweist und dazu ausgebildet ist als Turbine (6) zu fungieren.

5. Beschneiungsvorrichtung nach wenigstens einem der vorangegangenen Ansprüche, **dadurch gekennzeichnet, dass** die Pumpenanlage (9) eine elektrische Antriebseinheit (12) aufweist, welche elektrische Antriebseinheit (12) dazu ausgebildet ist, in einem Betriebsmodus als Motor zu arbeiten und in einem weiteren Betriebsmodus als Generator (7).

6. Beschneiungsvorrichtung nach wenigstens einem der vorangegangenen Ansprüche, **dadurch gekennzeichnet, dass** wenigstens ein alternative Energiequelle - vorzugsweise ein Solarmodul (13) und/oder wenigstens eine Windkraftanlage (14) - vorgesehen ist, welche alternativen Energiequelle dazu ausgebildet ist die Pumpenanlage (9) anzutreiben.

7. Beschneiungsvorrichtung nach wenigstens einem der vorangegangenen Ansprüche, **dadurch gekennzeichnet, dass** die Wasserleitung (4) ein Speicherreservoir (5) mit einer eine geringere absolute Höhe aufweisende Pumpenanlage (9) verbindet und zwischen Pumpenanlage (9) und Speicherreservoir (5) die wenigstens eine Entnahmestelle (2) zur Versorgung des Beschneiungsgerätes (3) - vorzugsweise einer Schneekanone und/oder eine Schneelanze - angeordnet ist.

8. Beschneiungsvorrichtung nach wenigstens einem der vorangegangenen Ansprüche, **dadurch gekennzeichnet, dass** die Turbine (6) dazu ausgebildet ist das wenigstens eine Beschneiungsgerätes (3) anzutreiben.

9. Beschneiungsvorrichtung nach wenigstens einem der vorangegangenen Ansprüche, **dadurch gekennzeichnet, dass** entlang der Wasserleitung (4) wenigstens zwei - vorzugsweise mehrere - Entnahmestellen (2) vorgesehen sind, wobei an jeder Entnahmestellen (2) wenigstens ein Beschneiungsgerät (3) angeschlossen ist.

10. Verfahren zum Betreiben einer Beschneiungsvorrichtung (1), vorzugsweise einer Beschneiungsvorrichtung (1) nach einem der Ansprüche 1 bis 9, **gekennzeichnet durch** drei Betriebszustände der Beschneiungsvorrichtung (1):
- Umsetzen einer potenzielle Energie eines Speicherreservoirs (5) - vorzugsweise eines Speichersees - der Beschneiungsvorrichtung (1) in kinetische Energie mittels wenigstens einer Turbine (6), vorzugsweise Erzeugen von elektrischer Energie mittels eines durch die wenigstens eine Turbine (6) angetriebenen Generators (7),
- Pumpen von Wasser über eine Wasserleitung (4) in ein Speicherreservoir (5), welches Speicherreservoir (5) eine größere absolute Höhenlage aufweist und
- Fördern von Wasser über die Wasserleitung (4) und eine Entnahmestelle (2) zu wenigstens einem Beschneiungsgerät (3).

11. Verfahren nach Anspruch 10, **dadurch gekennzeichnet, dass** wahlweise immer nur einer der Betriebszustände ausgeführt wird.
